# EUROPEAN PATENT SPECIFICATION

(11) **EP 0 984 207 B1**
(45) Date of publication and mention of the grant of the patent: **26.02.2003**
(21) Application number: 99202866.2
(22) Date of filing: 03.09.1999
(51) Int. Cl.: F16H 57/04

(54) **Lubrication mechanism in power transmission**
Schmiervorrichtung in einem Getriebe
Dispositif de lubrification d'une transmission de puissance

(30) Priority: 03.09.1998 JP 24983098
(43) Date of publication of application: 08.03.2000
(73) Proprietor: Aisin Ai Kabushiki Kaisha, Nishio-shi, Aichi-ken (JP)
(72) Inventor: Nitta, Yasuhiro, Nagoya-shi, Aichi-ken (JP)
(74) Representative: SERJEANTS

(56) References cited:
- GB-A- 2 078 875
- US-A- 4 501 167
- US-A- 4 930 601
- US-A- 5 154 517
- US-A- 5 667 036

## Description

The present invention relates to a lubrication mechanism in a power transmission of an automotive vehicle as defined in the preamble of claim 1 and known, for instance, from US-A-5 154 517.

Disclosed in Japanese Patent Publication No.343518 is a lubrication mechanism in a power transmission of the type which includes a support shaft rotatably mounted at one end on an end wall of a housing through a ball bearing and a set of change-speed gears mounted on the support shaft, wherein an oil chamber formed in the end wall of the housing at the one end of the support shaft is supplied with lubrication oil through an oil supply passage formed in the end wall of the housing to supply the lubrication oil therefrom into an axial oil passage of the support shaft for lubrication of the change-speed gears. In the power transmission, the lubrication mechanism includes an annular guide member coupled at its outer periphery with an internal annular stepped portion of the end wall of the housing and positioned by engagement with the ball bearing, the annular guide member having a pipe portion integrally formed therewith and inserted into the axial oil passage of the support shaft to supply therethrough the lubrication oil from the oil chamber into the oil passage for lubrication of the change-speed gears.

As in the lubrication mechanism the pipe portion of the annular guide member is provided merely to introduce the lubrication oil from the oil chamber into the axial oil passage of the support shaft, a sufficient amount of lubrication oil may not be supplied into the axial oil passage of the support shaft. In addition, the assembly of the annular plate in a limited space of the power transmission results in an increase of the manufacturing cost of the power transmission.

It is, therefore, a primary object of the present invention to provide a, lubrication mechanism in a power transmission capable of overcoming the problems in the conventional lubrication mechanism discussed above.

According to the present invention, there is provided a lubrication mechanism in a power transmission of the type which includes a support shaft rotatably mounted at one end thereof on an end wall of a housing through a bearing and a set of change-speed gears mounted on the support shaft, wherein an oil chamber formed by the bearing and the end wall of the housing at the one end of the support shaft is supplied with lubrication oil through an oil supply passage formed in the end wall of the housing to supply the lubrication oil therefrom into an axial oil passage of the support shaft for lubrication of the change-speed gears, characterized in that the end wall of the housing is formed at its internal surface with a plurality of circumferentially spaced spiral ridges oriented towards the one end of the support shaft in a rotation direction and exposed to the interior of the oil chamber and that the center of the spiral ridges is positioned coaxially with the axial oil passage of the support shaft.

In a practical embodiment of the present invention, it is preferable that a projection is formed at the center of the spiral ridges and protrudes into the axial oil passage of the support shaft.

For a better understanding of the present invention, and to show how the same may be carried into effect, reference will now be made, by way of example, to the accompanying drawings, in which:
Fig. 1 is a sectional view of a lubrication mechanism in a power transmission in accordance with the present invention;
Fig. 2 is an enlarged sectional view of a main portion of the lubrication mechanism; and
Fig. 3 is an illustration of the interior of an oil chamber shown in Figs. 1 and 2.

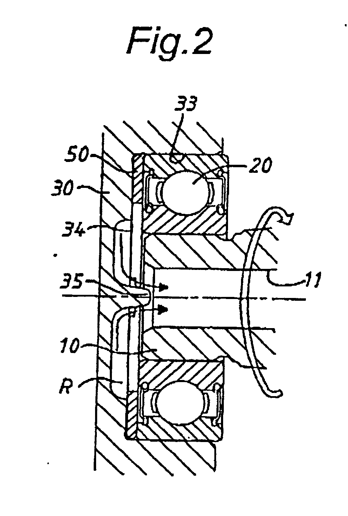

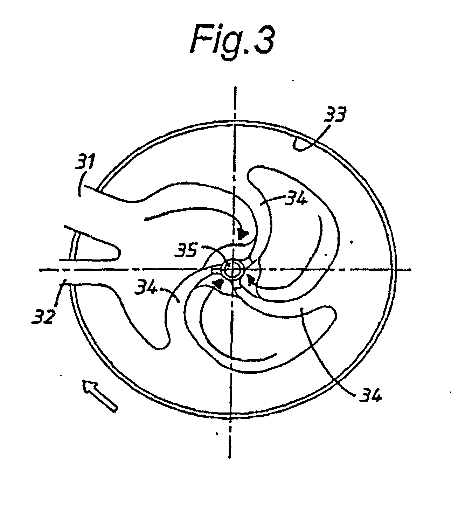

In Figs. I to 3 of the drawings, there is illustrated a practical embodiment of a lubrication mechanism in a power transmission in accordance with the present invention. The power transmission includes an input shaft 10 rotatably mounted on an end wall of a housing 30 through a ball bearing 20 at its left-hand end in the figure. In the power transmission, an oil chamber R is formed in the end wall of housing 30 at the left-hand end of input shaft 10 as shown in Fig. 2 to store an amount of lubrication oil supplied through an oil supply passage 31 formed in the end wall of housing 30 as shown in Fig. 3. The lubrication oil is collected in a conventional manner and introduced into the oil supply passage 31 and any excess amount of the lubrication oil is discharged through an exhaust passage 32 formed in the end wall of housing 30. The lubrication oil discharged from the exhaust passage 32 is circulated into an oil reservoir (not shown) of the transmission in a conventional manner.

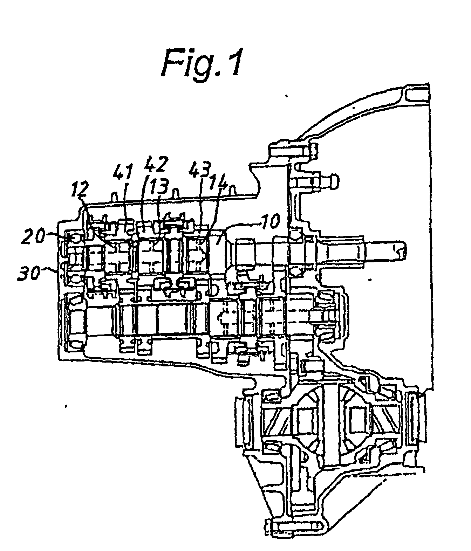

As shown in Fig. 1, three change-speed gears 41, 42, 43 are rotatably mounted on the input shaft 10 through needle bearings and, as shown in Fig. 2, an axial oil passage 11 is formed in the left-hand portion of input shaft 10 to supply therethrough the lubrication oil from the oil chamber R into the supported portions of change-speed gears 41, 42, 43. The input shaft 10 is formed with axially spaced radial holes 12, 13 and 14 in communication with the axial oil passage 11 to permit the passage of lubrication oil therethrough to the supported portions of change-speed gears 41, 42 and 43.

The ball bearing 20 is in the form of a sealed ball bearing coupled within a cylindrical mounting hole 33 in the end wall of housing 30 through an annular plate 50. The bearing 20 is positioned in place by engagement with the annular plate 50 to ensure the amount of lubrication oil supplied into the axial oil passage 11 from the oil chamber R.

As shown in Fig. 3, the end wall of housing 30 is formed at its internal surface with three circumferentially spaced spiral guide ridges 34 and a projection 35 located at the center of spiral guide ridges 34. As shown in Figs. 2 and 3, the spiral guide ridges 34 are exposed to the interior of oil chamber R and oriented to spiral towards the center of input shaft 10 in a rotation direction of input shaft 10. The projection 35 protrudes into the axial oil passage 11 of input shaft 10 from the center of spiral guide ridges 34.

In the lubrication mechanism described above, the rotation of input shaft 10 in a direction shown by an arrow in Fig. 3 causes the lubrication oil supplied into the oil chamber R to flow towards the central projection 35 along the spiral guide ridges 34. Thus, as shown by arrows in Fig. 3, the flow of lubrication oil is introduced by the spiral guide ridges 34 into the axial oil passage 11 of input shaft 10. This is useful to supply a sufficient amount of lubrication oil into the axial oil passage 11 of input shaft 10 for lubrication of the change-speed gears 41, 42, 43 on the input shaft 10.

In addition, the projection 35 protruding into the axial oil passage 11 of input shaft 10 is effective to introduce the flow of lubrication oil from the center of the spiral guide ridges 34 into the axial oil passage 11 of input shaft 10 for sufficient lubrication of the change-speed gears 41, 42, 43.

As in the lubrication mechanism the rotation of input shaft 10 is utilized to efficiently introduce the lubrication oil from the spiral guide ridges 34 into the axial oil passage 11, it is not necessary to provide the guide member for introduction of lubrication oil as in the conventional lubrication mechanism discussed above. Thus, the lubrication mechanism can be provided in a simple construction in a limited space of the power transmission.

Although in the embodiment described above, the projection 35 protrudes into the axial oil passage 11 of input shaft 10, the center of spiral guide ridges 34 may be positioned coaxially with the center of input shaft 10 without the projection 35. Although in the described embodiment the spiral guide ridges 34 have been spaced circumferentially at an appropriate distance, the number and arrangement of spiral guide ridges 34 may be modified in accordance with the internal construction of the power transmission.

## Claims

1. A lubrication mechanism in a power transmission of the type which includes a support shaft (10) rotatably mounted at one end thereof on an end wall of a housing (30) through a bearing (20) and a set of change-speed gears (41, 42, 43) mounted on the support shaft, wherein an oil chamber (R) formed by the bearing and the end wall of the housing at the one end of the support shaft is supplied with lubrication oil through an oil supply passage (31) formed in the end wall of the housing to supply the lubrication oil therefrom into an axial oil passage (11) of the support shaft for lubrication of the change-speed gears (41, 42, 43);
**characterized in that** the end wall of the housing (30) is formed at its internal surface with a plurality of circumferentially spaced spiral ridges (34) oriented towards the one end of the support shaft (10) in a rotation direction and exposed to the interior of the oil chamber (R); and **in that** the center of the spiral ridges is positioned coaxially with the axial oil passage (11) of the support shaft.

2. A lubrication mechanism as claimed in Claim 1, wherein a projection (35) formed at the center of the spiral ridges (34) protrudes into the axial oil passage (11) of the support shaft.

## Patentansprüche

1. Schmiervorrichtung in einem Getriebe von der Art, dass es eine Trägerwelle (10), die mittels eines Lagers (20) an einem ihrer Enden drehbar an einer Stirnwand eines Gehäuses (30) angebracht ist, und eine Gruppe von Gangwechselzahnrädern (41, 42, 43) enthält, die auf der Welle befestigt sind, wobei eine Ölkammer(R), die durch das Lager und die Stirnwand des Gehäuses an dem einen Ende der Trägerwelle gebildet wird, über eine Ölversorgungsöffnung (31) mit Schmieröl versorgt wird, die in der Stirnwand des Gehäuses ausgebildet ist, damit von dort das Schmieröl in einen axialen Öldurchlass (11) der Trägerwelle zum Schmieren der Gangwechselzahnräder (41, 42, 43) gefördert wird;
**dadurch gekennzeichnet, dass**
auf der inneren Oberfläche der Stirnwand des Gehäuses (30) eine Vielzahl von in Umfangsrichtung beabstandeten, spiralförmigen Stegen (34) ausgebildet sind, die in Richtung auf das eine Ende der Trägerwelle (10) in einer Drehrichtung ausgerichtet sind und zum Inneren der Ölkammer (R) liegen; und dass der Mittelpunkt der spiralförmigen Stege in einer Achse mit dem axialen Öldurchlass (11) der Trägerwelle angeordnet ist.

2. Schmiervorrichtung nach Anspruch 1, wobei ein Vorsprung, der im Mittelpunkt der spiralförmigen Stege (35) ausgebildet ist, in den axialen Öldurchlass (11) der Trägerwelle hineinragt.

## Revendications

1. Mécanisme de lubrification dans une transmission de puissance du type qui comprend un arbre support (10) monté en rotation à une extrémité de celui-ci sur une paroi d'extrémité d'un carter (30) par l'intermédiaire d'un roulement (20) et d'un ensemble de pignons de changement de vitesse (41, 42, 43) montés sur l'arbre support, dans lequel une chambre d'huile (R) formée par le roulement et la paroi d'extrémité du carter au niveau de l'extrémité de l'arbre support est alimentée en huile de lubrification par l'intermédiaire d'un passage d'alimentation en huile (31) formé dans la paroi d'extrémité du carter afin de délivrer l'huile de lubrification à partir de celui-ci dans un passage d'huile axial (11) de l'arbre support pour la lubrification des pignons de changement de vitesse (41, 42, 43) ;
**caractérisé en ce que** la paroi d'extrémité du carter (30) est formée au niveau de sa surface interne avec une pluralité de nervures en spirales espacées sur la circonférence (34) orientées vers l'extrémité de l'arbre support (10) dans un sens de rotation et exposées à l'intérieur de la chambre d'huile (R) ; et **en ce que** le centre des nervures en spirales est positionné de façon coaxiale avec le passage d'huile axial (11) sur l'arbre support.

2. Mécanisme de lubrification selon la revendication 1, dans lequel une saillie (35) formée au centre des nervures en spirales (34) dépasse dans le passage d'huile axial (11) de l'arbre support.
